# EUROPEAN PATENT APPLICATION

(11) **EP 4 201 726 A1**
(43) Date of publication of application: **28.06.2023**
(21) Application number: 21872549.7
(22) Date of filing: 24.09.2021
(51) Int. Cl.: B60L 3/00, B60K 1/04

(54) **VEHICLE-USE POWER SUPPLY CONTROL DEVICE**

(30) Priority: 24.09.2020 JP 2020159588
(71) Applicant: HINO MOTORS, LTD., Hino-shi, Tokyo 191-8660 (JP)
(72) Inventor: TANIGUCHI, Koichiro, Hino-shi, Tokyo 191-8660 (JP); KOWADA, Minoru, Hino-shi, Tokyo 191-8660 (JP); NAMIMA, Jun, Hino-shi, Tokyo 191-8660 (JP); OKAZOE, Yuta, Hino-shi, Tokyo 191-8660 (JP)
(74) Representative: D Young & Co LLP
(86) International application number: PCT/JP2021/035031
(87) International publication number: WO 2022/065420

(57) **Abstract**

A vehicle power supply control device includes an interlock circuit configured to detect opening of a case of an electronic device, an interlock detecting unit configured to detect the opening based on an input signal from the interlock circuit, a vehicle speed detecting unit, and a power supply control unit configured to cut off supply of electric power from an onboard battery to the electronic device when a duration of a state in which a vehicle speed is 0 exceeds a predetermined stoppage time after the opening of the case has been detected.

## Description

### Technical Field

The present disclosure relates to a vehicle power supply control device.

### Background Art

For example, various high-voltage electronic devices such as a high-voltage battery and a motor serving as a drive source are mounted in an electric vehicle. In such an electric vehicle, in order to prevent an operator from getting an electric shock at the time of maintenance work, supply of electric power to a high-voltage electronic device is cut off when opening of a case of the high-voltage electronic device is detected by an interlock circuit provided in the case (for example, see Patent Literature 1).

### Citation List

### Patent Literature

[Patent Literature 1] Japanese Unexamined Patent Publication No. 2016-058173

### Summary of Invention

### Technical Problem

Here, the interlock circuit may erroneously detect that the case of the high-voltage electronic device is open when loose connection or disconnection of an interlock switch provided in the interlock circuit occurs. For example, when it is erroneously detected that the case is open while the electric vehicle is being running, it is conceivable that the supply of electric power be cut off and the electric vehicle stop on a travel lane even if an operator cannot access the electronic device to perform maintenance work. In this way, even when opening of the case is detected by the interlock circuit, it may not be appropriate to cut off supply of electric power immediately.

Therefore, the present disclosure provides a vehicle power supply control device that can cut off supply of electric power at a more appropriate timing when opening of a case of an electronic device or the like is detected.

### Solution to Problem

According to a first aspect of the present disclosure, there is provided a vehicle power supply control device that is mounted in an electric vehicle and that controls supply of electric power from an onboard battery to an electronic device, the vehicle power supply control device including: an interlock circuit configured to detect opening of a case of the electronic device or separation of a power supply harness from the electronic device; an interlock detecting unit configured to detect the opening or the separation based on an input signal from the interlock circuit; a vehicle speed detecting unit configured to detect a vehicle speed of the electric vehicle; and a power supply control unit configured to cut off supply of electric power from the onboard battery to the electronic device when a duration of a state in which the vehicle speed detected by the vehicle speed detecting unit is 0 exceeds a predetermined stoppage time after the opening or the separation has been detected by the interlock detecting unit.

In the vehicle power supply control device, even when opening of a case or the like has been detected by the interlock detecting unit, supply of electric power from the onboard battery to the electronic device is not cut off until the duration of the state in which the vehicle speed is 0 exceeds the predetermined stoppage time. That is, for example, when the interlock detecting unit erroneously detects that opening of a case or the like has occurred due to defects of the interlock circuit, supply of electric power is not cut off immediately in a situation in which an operator cannot access the electronic device because the electric vehicle is running or because an elapsed time from stoppage is short. A state in which the electronic device is operating is maintained as far as possible. In this way, the vehicle power supply control device can cut off supply of electric power at a more appropriate timing when opening of the case of the electronic device or the like is detected.

In the vehicle power supply control device, the electronic device may include a first electronic device and a second electronic device, the interlock circuit may include a first interlock circuit configured to detect opening of a case of the first electronic device or separation of the power supply harness from the first electronic device and a second interlock circuit configured to detect opening of a case of the second electronic device or separation of the power supply harness from the second electronic device, the interlock detecting unit may include a first interlock detecting unit configured to detect the opening or the separation for the first electronic device based on an input signal from the first interlock circuit and a second interlock detecting unit configured to detect the opening or the separation for the second electronic device based on an input signal from the second interlock circuit, the stoppage time may be determined in advance for each of the first electronic device and the second electronic device, a first stoppage time is determined in advance for the first electronic device, and a second stoppage time is determined in advance for the second electronic device, and the power supply control unit may be configured to cut off supply of electric power from the onboard battery to the first electronic device and the second electronic device when the duration of the state in which the vehicle speed detected by the vehicle speed detecting unit is 0 exceeds the first stoppage time after the opening or the separation for the first electronic device has been detected by the first interlock detecting unit and to cut off supply of electric power from the onboard battery to the first electronic device and the second electronic device when the duration of the state in which the vehicle speed detected by the vehicle speed detecting unit is 0 exceeds the second stoppage time after the opening or the separation for the second electronic device has been detected by the second interlock detecting unit. In this case, the vehicle power supply control device can control a time required until supply of electric power is cut off after the vehicle speed has reached 0 depending on the electronic device of which opening of a case or the like has been detected out of the first electronic device and the second electronic device. In this way, the vehicle power supply control device can cut off supply of electric power at a timing appropriate for the electronic device of which the opening of the case or the like has been detected.

In the vehicle power supply control device, the stoppage time may be a shortest time required for an operator to access the electronic device after the electric vehicle has stopped. In this case, even when an operator starts to access the electronic device for the purpose of maintenance work immediately after the electric vehicle has stopped, supply of electric power to the electronic device is cut off when the operator accesses the electronic device. In this way, the vehicle power supply control device can cut off supply of electric power at an appropriate timing while maintaining operation of the electronic device by delaying cutoff of supply of electric power as far as possible.

In the vehicle power supply control device, the first stoppage time may be a shortest time required for an operator to access the first electronic device after the electric vehicle has stopped, and the second stoppage time may be a shortest time required for an operator to access the second electronic device after the electric vehicle has stopped. For example, it is assumed that opening or separation for the first electronic device has been detected and an operator has started access to the first electronic device for the purpose of maintenance work immediately after the electric vehicle has stopped. In this case, supply of electric power to the first electronic device is cut off when the operator accesses the first electronic device. For example, it is assumed that opening or separation for the second electronic device has been detected and an operator has started access to the second electronic device for the purpose of maintenance work immediately after the electric vehicle has stopped. In this case, supply of electric power to the second electronic device is cut off when the operator accesses the second electronic device. In this way, the vehicle power supply control device can cut off supply of electric power at an appropriate timing while maintaining operations of the first electronic device and the second electronic device by delaying cutoff of supply of electric power as far as possible.

According to a second aspect of the present disclosure, there is provided a vehicle power supply control device that is mounted in an electric vehicle and that controls supply of electric power from an onboard battery to an electronic device, the vehicle power supply control device including: an interlock circuit configured to detect opening of a case of the electronic device or separation of a power supply harness from the electronic device; an interlock detecting unit configured to detect the opening or the separation based on an input signal from the interlock circuit; a vehicle speed detecting unit configured to detect a vehicle speed of the electric vehicle; an imaging unit configured to image surroundings of the electric vehicle; a maintenance work recognizing unit configured to recognize whether an operator is performing maintenance work on the electric vehicle based on an image captured by the imaging unit; and a power supply control unit configured to cut off supply of electric power from the onboard battery to the electronic device when the vehicle speed detected by the vehicle speed detecting unit is 0 and the maintenance work recognizing unit recognizes that maintenance work is being performed after the opening or the separation has been detected by the interlock detecting unit.

In the vehicle power supply control device, even when opening of a case or the like has been detected by the interlock detecting unit, supply of electric power from the onboard battery to the electronic device is not cut off until the vehicle speed is 0 and the maintenance work recognizing unit recognizes that maintenance work is being performed. That is, for example, when the interlock detecting unit detects that an opening of a case or the like has occurred, supply of electric power is not cut off immediately until it is recognized that the operator has started the maintenance work based on the captured image. A state in which the electronic device is operating is maintained as far as possible. On the other hand, the power supply control unit cuts off supply of electric power when the maintenance work recognizing unit recognizes that the operator is performing the maintenance work, that is, when the operator is actually performing the maintenance work. In this way, the vehicle power supply control device can cut off supply of electric power at a more appropriate timing when opening of the case of the electronic device or the like is detected.

According to a third aspect of the present disclosure, there is provided a vehicle power supply control device that is mounted in an electric vehicle and that controls supply of electric power from an onboard battery to an electronic device, the vehicle power supply control device including: an interlock circuit configured to detect opening of a case of the electronic device or separation of a power supply harness from the electronic device; an interlock detecting unit configured to detect the opening or the separation based on an input signal from the interlock circuit; a vehicle speed detecting unit configured to detect a vehicle speed of the electric vehicle; a position information acquiring unit configured to acquire position information of the electric vehicle; a stopping position determining unit configured to determine whether the electric vehicle has stopped in a safety zone or a parking space based on the position information acquired by the position information acquiring unit and map information; and a power supply control unit configured to cut off supply of electric power from the onboard battery to the electronic device when the vehicle speed detected by the vehicle speed detecting unit is 0 and the stopping position determining unit determines that the electric vehicle has stopped in a safety zone or a parking space after the opening or the separation has been detected by the interlock detecting unit.

In the vehicle power supply control device, even when opening of a case or the like has been detected by the interlock detecting unit, supply of electric power from the onboard battery to the electronic device is not cut off until the vehicle speed is 0 and the stopping position determining unit determines that the electric vehicle stops in a safety zone or a parking space. That is, for example, when the interlock detecting unit detects that an opening of a case or the like has occurred, supply of electric power is not cut off immediately until it is determined that the electric vehicle stops in the safety zone or the parking space in which an operator can perform maintenance work. A state in which the electronic device is operating is maintained as far as possible. On the other hand, the power supply control unit cuts off supply of electric power when the electric vehicle stops in the safety zone or the parking space and an operator can perform maintenance work thereon. In this way, the vehicle power supply control device can cut off supply of electric power at a more appropriate timing when opening of the case of the electronic device or the like is detected.

According to a fourth aspect of the present disclosure, there is provided a vehicle power supply control device that is mounted in an electric vehicle and that controls supply of electric power from an onboard battery to an electronic device, the vehicle power supply control device including: an interlock circuit configured to detect opening of a case of the electronic device or separation of a power supply harness from the electronic device; an interlock detecting unit configured to detect the opening or the separation based on an input signal from the interlock circuit; a vehicle speed detecting unit configured to detect a vehicle speed of the electric vehicle; a maintenance work information acquiring unit configured to acquire maintenance work information indicating that an operator is performing maintenance work on the electric vehicle; and a power supply control unit configured to cut off supply of electric power from the onboard battery to the electronic device when the vehicle speed detected by the vehicle speed detecting unit is 0 and the maintenance work information is acquired by the maintenance work information acquiring unit after the opening or the separation has been detected by the interlock detecting unit.

In the vehicle power supply control device, even when opening of a case or the like has been detected by the interlock detecting unit, supply of electric power from the onboard battery to the electronic device is not cut off until the vehicle speed is 0 and maintenance work information indicating that an operator is performing maintenance work on the electric vehicle is acquired. That is, for example, when the interlock detecting unit detects that an opening of a case or the like has occurred, supply of electric power is not cut off immediately until the maintenance work information is acquired. A state in which the electronic device is operating is maintained as far as possible. On the other hand, the power supply control unit cuts off supply of electric power when the maintenance work information is acquired and an operator is performing maintenance work. In this way, the vehicle power supply control device can cut off supply of electric power at a more appropriate timing when opening of the case of the electronic device or the like is detected.

### Advantageous Effects of Invention

According to the aspects of the present disclosure, it is possible to cut off supply of electric power at a more appropriate timing when opening of a case of an electronic device or the like is detected.

### Brief Description of Drawings

FIG. 1 is a block diagram schematically illustrating a configuration of an electric vehicle in which a vehicle power supply control device according to a first embodiment is mounted.
FIG. 2 is a timing chart illustrating states of constituents when an interlock is detected.
FIG. 3 is a flowchart illustrating a flow of a power supply cutting-off process when an interlock is detected.
FIG. 4 is a block diagram schematically illustrating a configuration of an electric vehicle in which a vehicle power supply control device according to a second embodiment is mounted.
FIG. 5 is a flowchart illustrating a flow of a power supply cutting-off process when an interlock is detected.

### Description of Embodiments

Hereinafter, embodiments of the present disclosure will be described with reference to the accompanying drawings. In the drawings, the same or corresponding elements will be referred to by the same reference signs and repeated description thereof will be omitted.

### (First embodiment)

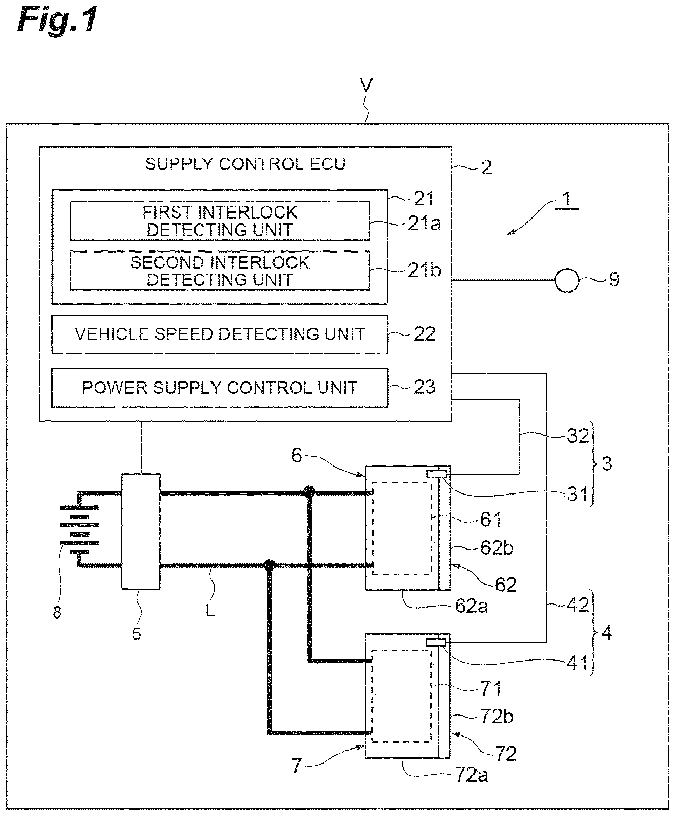

First, a vehicle power supply control device according to a first embodiment will be described below. As illustrated in FIG. 1, a vehicle power supply control device 1 is mounted in an electric vehicle V. The electric vehicle V includes an electric motor as a drive source. The electric vehicle V may be a vehicle having only an electric motor as a drive source mounted therein or may be a vehicle having an engine in addition to an electric motor mounted therein (a so-called hybrid vehicle).

A first electronic device (electronic device) 6, a second electronic device (electronic device) 7, and a high-voltage battery (onboard battery) 8 are mounted in the electric vehicle V. The first electronic device 6 and the second electronic device 7 are high-voltage devices. In this embodiment, for example, it is assumed that two electronic devices including the first electronic device 6 and the second electronic device 7 are mounted in the electric vehicle V. Each of the first electronic device 6 and the second electronic device 7 may be, for example, one of an electric motor serving as a drive source of the electric vehicle V, an inverter circuit, an electric air conditioner, and an electric water pump. The first electronic device 6 and the second electronic device 7 are electrically connected to the high-voltage battery 8 via a power supply harness L and operate using electric power of the high-voltage battery 8.

The vehicle power supply control device 1 controls supply of electric power from the high-voltage battery 8 to the first electronic device 6 and the second electronic device 7. The vehicle power supply control device 1 includes, a supply control electronic control unit (ECU) 2, a first interlock circuit (interlock circuit) 3, a second interlock circuit (interlock circuit) 4, and a cutoff circuit 5.

The first interlock circuit 3 is provided for the first electronic device 6. Here, the first electronic device 6 includes a first electronic device body 61 and a first case (case) 62. The first electronic device body 61 is a device that operates using electric power of the high-voltage battery 8. The first case 62 accommodates the first electronic device body 61 such that a person cannot directly access the first electronic device body 61 from the outside. The first case 62 includes a first case body 62a that accommodates the first electronic device body 61 therein and includes an opening and a first lid 62b that covers the opening of the first case body 62a. The first lid 62b is provided for the first case body 62a such that the first lid can open and close the opening the first case body 62a. That is, the first case 62 can be opened (the opening of the first case body 62a can be opened) by opening of the first lid 62b. In a state in which the first case 62 is open, an operator can directly access (directly contact) the first electronic device body 61 of the first electronic device 6.

The first interlock circuit 3 is a circuit that detects opening of the first case 62 of the first electronic device 6 or separation of the power supply harness L from the first electronic device 6 (a state in which the power supply harness L is separated from the first electronic device 6). In this embodiment, the first interlock circuit 3 includes a first interlock switch 31 and a first interlock wire 32.

The first interlock switch 31 is a switch that detects a state in which the first lid 62b is open from the first case body 62a (opening of the first case 62) or separation of the power supply harness L from the first electronic device 6. Various types of known switches can be used as the first interlock switch 31. The first interlock wire 32 connects the first interlock switch 31 to the supply control ECU 2.

The second interlock circuit 4 is provided for the second electronic device 7. Here, the second electronic device 7 includes a second electronic device body 71 and a second case (case) 72. The second electronic device body 71 is a device that operates using electric power of the high-voltage battery 8. The second case 72 accommodates the second electronic device body 71 such that a person cannot directly access the second electronic device body 71 from the outside. The second case 72 includes a second case body 72a that accommodates the second electronic device body 71 therein and includes an opening and a second lid 72b that covers the opening of the second case body 72a. The second lid 72b is provided for the second case body 72a such that the second lid can open and close the opening of the second case body 72a. That is, the second case 72 can be opened (the opening of the second case body 72a can be opened) by opening the second lid 72b. In a state in which the second case 72 is open, an operator can directly access the second electronic device body 71 of the second electronic device 7.

The second interlock circuit 4 is a circuit that detects opening of the second case 72 of the second electronic device 7 or separation of the power supply harness L from the second electronic device 7 (a state in which the power supply harness L is separated from the second electronic device 7). In this embodiment, the second interlock circuit 4 includes a second interlock switch 41 and a second interlock wire 42.

The second interlock switch 41 is a switch that detects a state in which the second lid 72b is open from the second case body 72a (opening of the second case 72) or separation of the power supply harness L from the second electronic device 7. Various types of known switches can be used as the second interlock switch 41. The second interlock wire 42 connects the second interlock switch 41 to the supply control ECU 2.

In this way, the first interlock circuit 3 and the second interlock circuit 4 are provided for the first electronic device 6 and the second electronic device 7, respectively. Accordingly, the supply control ECU 2 can determine that opening of the case or the like has occurred in which of the first electronic device 6 and the second electronic device 7.

The cutoff circuit 5 is provided for the power supply harness L. The cutoff circuit 5 is a circuit that cuts off supply of electric power from the high-voltage battery 8 to the first electronic device 6 and the second electronic device 7 based on an instruction from the supply control ECU 2. The cutoff circuit 5 may include, for example, a device such as a relay for cutting off a circuit.

The supply control ECU 2 controls various operations in the vehicle power supply control device 1. The supply control ECU 2 is, for example, an electronic control unit including a central processing unit (CPU), a read only memory (ROM), and a random access memory (RAM). The supply control ECU 2 functionally includes an interlock detecting unit 21, a vehicle speed detecting unit 22, and a power supply control unit 23.

The interlock detecting unit 21 detects whether an interlock occurs. Specifically, the interlock detecting unit 21 detects opening of the first case 62, opening of the second case 72, separation of the power supply harness L from the first electronic device 6, and separation of the power supply harness L from the second electronic device 7 as the interlocks. The interlock detecting unit 21 includes first interlock detecting unit 21a and a second interlock detecting unit 21b.

The first interlock detecting unit 21a detects opening of the first case 62 and separation of the power supply harness L from the first electronic device 6 based on an input signal from the first interlock circuit 3. The second interlock detecting unit 21b detects opening of the second case 72 and separation of the power supply harness L from the second electronic device 7 based on an input signal from the second interlock circuit 4.

Here, the first interlock detecting unit 21a may detect that opening of the first case 62 or separation of the power supply harness L from the first electronic device 6 has occurred even when the first interlock circuit 3 has a defect (such as contact failure of the first interlock switch 31 or disconnection of the first interlock wire 32). Similarly, the second interlock detecting unit 21b may detect that opening of the second case 72 or separation of the power supply harness L from the second electronic device 7 has occurred even when the second interlock circuit 4 has a defect (such as contact failure of the second interlock switch 41 or disconnection of the second interlock wire 42).

The vehicle speed detecting unit 22 detects a vehicle speed of the electric vehicle V. The electric vehicle V includes a vehicle speed sensor 9 that detects a vehicle speed. In this case, the vehicle speed detecting unit 22 may detect the vehicle speed of the electric vehicle V based on an output signal from the vehicle speed sensor 9. The vehicle speed detecting unit 22 is not limited to detection of the vehicle speed using the output signal from the vehicle speed sensor 9, and may detect (acquire) the vehicle speed based on a signal acquired from a running control ECU or the like that controls running of the electric vehicle V.

The power supply control unit 23 cuts off supply of electric power from the high-voltage battery 8 to the first electronic device 6 and the second electronic device 7 by controlling the cutoff circuit 5 based on the interlock detected by the interlock detecting unit 21 and the vehicle speed detected by the vehicle speed detecting unit 22.

Specifically, the power supply control unit 23 cuts off supply of electric power from the high-voltage battery 8 to the first electronic device 6 and the second electronic device 7 when a duration of a state in which the vehicle speed detected by the vehicle speed detecting unit 22 is 0 exceeds a predetermined first stoppage time (a stoppage time) after opening or separation (an interlock) for the first electronic device 6 has been detected by the first interlock detecting unit 21a. That is, the power supply control unit 23 cuts off supply of electric power when an interlock for the first electronic device 6 has been detected while the electric vehicle V is running, the electric vehicle V stops after the interlock has been detected, and the stoppage state exceeds the first stoppage time. The power supply control unit 23 cuts off supply of electric power when an interlock for the first electronic device 6 has been detected while the electric vehicle V stops and an elapsed time after the electric vehicle V has stopped (a duration of the stoppage state) exceeds the first stoppage time. In this embodiment, the power supply control unit 23 controls the operation of the cutoff circuit 5 such that supply of electric power from the high-voltage battery 8 to the first electronic device 6 and the second electronic device 7 is cut off.

Here, the first stoppage time is determined for the first electronic device 6 in advance. Specifically, the first stoppage time is a shortest time required until an operator accesses the first electronic device 6 after the electric vehicle V has stopped. Accordingly, for example, it is assumed that opening of the first case 62 or the like is detected for the first electronic device 6 and an operator starts to access the first electronic device 6 for the purpose of maintenance work immediately after the electric vehicle V has stopped. In this case, supply of electric power to the first electronic device 6 is cut off when the operator accesses the first electronic device 6.

The power supply control unit 23 cuts off supply of electric power from the high-voltage battery 8 to the first electronic device 6 and the second electronic device 7 when a duration of a state in which the vehicle speed detected by the vehicle speed detecting unit 22 is 0 exceeds a predetermined second stoppage time (a stoppage time) after opening or separation (an interlock) for the second electronic device 7 has been detected by the second interlock detecting unit 21b. That is, the power supply control unit 23 cuts off supply of electric power when an interlock for the second electronic device 7 has been detected while the electric vehicle V is running, the electric vehicle V stops after the interlock has been detected, and the stoppage state exceeds the second stoppage time. The power supply control unit 23 cuts off supply of electric power when an interlock for the second electronic device 7 has been detected while the electric vehicle V stops and an elapsed time after the electric vehicle V has stopped (a duration of the stoppage state) exceeds the second stoppage time. In this embodiment, the power supply control unit 23 controls the operation of the cutoff circuit 5 such that supply of electric power from the high-voltage battery 8 to the first electronic device 6 and the second electronic device 7 is cut off.

Here, the second stoppage time is determined for the second electronic device 7 in advance. Specifically, the second stoppage time is a shortest time required until an operator accesses the second electronic device 7 after the electric vehicle V has stopped. Accordingly, for example, it is assumed that opening of the second case 72 or the like is detected for the second electronic device 7 and an operator starts to access the second electronic device 7 for the purpose of maintenance work immediately after the electric vehicle V has stopped. In this case, supply of electric power to the second electronic device 7 is cut off when the operator accesses the second electronic device 7.

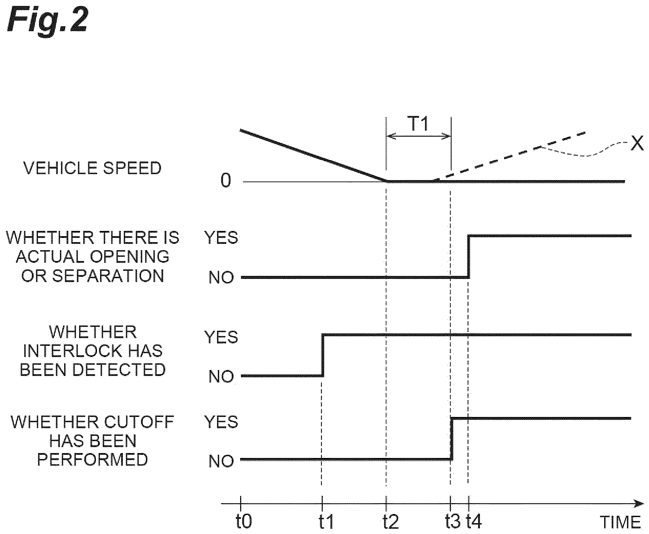

An example of states of the constituent units when an interlock has been detected by the interlock detecting unit 21 will be described below. Here, an example in which an interlock for the first electronic device 6 is detected by the interlock detecting unit 21 while the electric vehicle V is running will be described. As illustrated in FIG. 2, at time t1 while the electric vehicle V is running, the first interlock detecting unit 21a detects that an interlock for the first electronic device 6 has occurred based on an input signal from the first interlock circuit 3.

Thereafter, the electric vehicle V decelerates and the vehicle speed becomes 0 at time t2. After the vehicle speed becomes 0, the power supply control unit 23 determines whether the duration of the state in which the vehicle speed detected by the vehicle speed detecting unit 22 is 0 exceeds a predetermined first stoppage time T 1. At time t3 at which the duration of the state in which the vehicle speed is 0 exceeds the first stoppage time T1, the power supply control unit 23 cuts off supply of electric power from the high-voltage battery 8 to the first electronic device 6 and the second electronic device 7. At time t4 after supply of electric power has been cut off, an operator performs opening of the first case 62 of the first electronic device 6, separation of the power supply harness L, or the like. As described above, the first stoppage time T1 is the shortest time required until the operator accesses the first electronic device 6 after the electric vehicle V has stopped. Accordingly, at a time point of time t4 at which the operator accesses the first electronic device 6 after the electric vehicle V has stopped, supply of electric power to the first electronic device 6 and the second electronic device 7 has been cut off already.

On the other hand, for example, when the electric vehicle V starts before the first stoppage time T1 elapses after the electric vehicle V has stopped at time t2 (a state indicated by a dotted line X in the graph of the vehicle speed in FIG. 2), an operator does not perform maintenance work on the first electronic device 6 and thus supply of electric power is not cut off. An example of this situation is a case in which the electric vehicle V has stopped temporarily due to a traffic signal or the like.

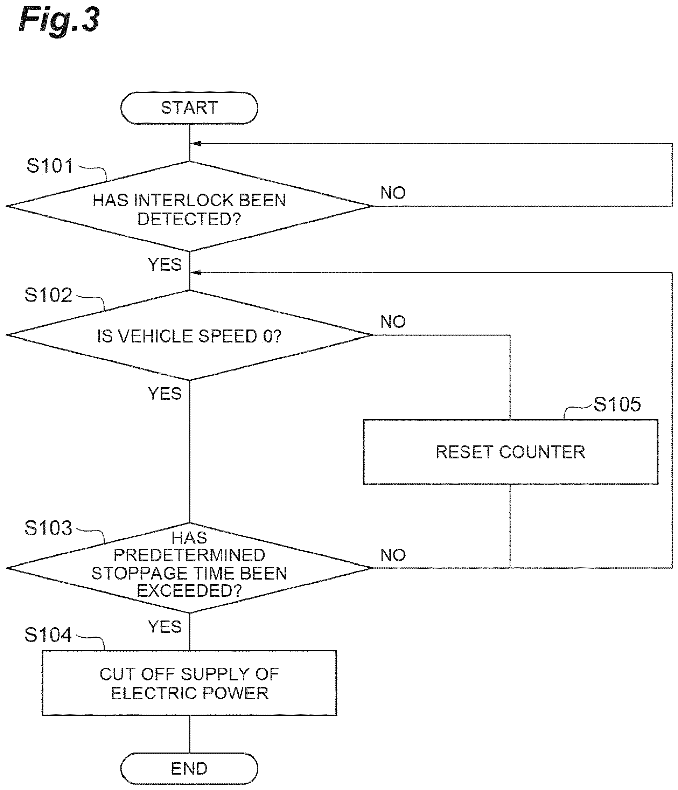

A flow of a power supply cutting-off process when an interlock has been detected will be described below. The flowchart illustrated in FIG. 3 starts when the electric vehicle V starts running thereof.

As illustrated in FIG. 3, the interlock detecting unit 21 detects whether an interlock has occurred in the first electronic device 6 and the second electronic device 7 (S101). When an interlock has not been detected (S 101: NO), the interlock detecting unit 21 repeatedly performs the process of S101 until an interlock is detected.

When an interlock has occurred, the interlock detecting unit 21 detects in which of the first electronic device 6 and the second electronic device 7 the interlock has occurred. Specifically, when an interlock has been detected by the first interlock detecting unit 21a, the interlock detecting unit 21 detects that an interlock has occurred in the first electronic device 6. On the other hand, when an interlock has been detected by the second interlock detecting unit 21b, the interlock detecting unit 21 detects that an interlock has occurred in the second electronic device 7.

When an interlock has been detected by the interlock detecting unit 21 (S101: YES), the power supply control unit 23 determines whether the vehicle speed detected by the vehicle speed detecting unit 22 is 0 (S102). When the vehicle speed is 0 (S102: YES), the power supply control unit 23 determines whether a stoppage duration after the electric vehicle V has stopped (a duration of the state in which the vehicle speed is 0) exceeds a predetermined stoppage time (S103). Here, the power supply control unit 23 uses a stoppage time (the first stoppage time or the second stoppage time) preset for the electronic device in which the interlock is determined to have occurred in S101 out of the first electronic device 6 and the second electronic device 7 as the predetermined stoppage time.

When the duration of the state in which the vehicle speed is 0 exceeds the predetermined stoppage time (S103: YES), the power supply control unit 23 cuts off supply of electric power from the high-voltage battery 8 to the first electronic device 6 and the second electronic device 7 (S104). On the other hand, when the duration of the state in which the vehicle speed is 0 does not exceed the predetermined stoppage time (S103: NO), the power supply control unit 23 causes the routine to return to S102 and performs the aforementioned processes.

When it is determined in Step S102 that the vehicle speed is not 0 (S102: NO), the power supply control unit 23 resets a counter of the duration of the state in which the vehicle speed is 0 (S 105).

As described above, in the vehicle power supply control device 1, even when occurrence of an interlock such as opening of the first case 62 has been detected by the interlock detecting unit 21, supply of electric power from the high-voltage battery 8 to the first electronic device 6 and the second electronic device 7 is not cut off until the duration of the state in which the vehicle speed is 0 exceeds the predetermined stoppage time. That is, for example, even when the interlock detecting unit 21 erroneously detects that an interlock such as opening of the first case 62 has occurred due to a defect in the first interlock circuit 3 or the second interlock circuit 4 or the like, supply of electric power is not cut off immediately in a situation in which an operator cannot access the first electronic device 6 or the like because the electric vehicle is running or the elapsed time after stoppage is short. A state in which the first electronic device 6 or the like is operating is maintained as far as possible. When the first electronic device 6 or the like can operate as far as possible, the electric vehicle V can run or the like until supply of electric power is cut off. In this way, the vehicle power supply control device 1 can cut off supply of electric power at a more appropriate timing when occurrence of an interlock in the first electronic device 6 and the second electronic device 7 is detected.

As a stoppage time until supply of electric power is cut off after the vehicle speed has become 0, the first stoppage time is determined in advance for the first electronic device 6 and the second stoppage time is determined in advance for the second electronic device 7. In this case, the vehicle power supply control device 1 can control a time until supply of electric power is cut off after the vehicle speed has become 0 depending on the electronic device in which occurrence of an interlock is detected out of the first electronic device 6 and the second electronic device 7. In this way, the vehicle power supply control device 1 can cut off supply of electric power at an appropriate timing based on the electronic device in which occurrence of an interlock is detected.

The first stoppage time set for the first electronic device 6 is the shortest time required until an operator accesses the first electronic device 6 after the electric vehicle V has stopped. The second stoppage time set for the second electronic device 7 is the shortest time required until an operator accesses the second electronic device 7 after the electric vehicle V has stopped. In this case, it is assumed that occurrence of an interlock in the first electronic device 6 is detected and an operator starts to access the first electronic device 6 for the purpose of maintenance work immediately after the electric vehicle V has stopped. In this case, supply of electric power to the first electronic device 6 is cut off already when the operator accesses the first electronic device 6. It is assumed that occurrence of an interlock in the second electronic device 7 is detected and an operator starts to access the second electronic device 7 for the purpose of maintenance work immediately after the electric vehicle V has stopped. In this case, supply of electric power to the second electronic device 7 is cut off already when the operator accesses the second electronic device 7. In this way, the vehicle power supply control device 1 can cut off supply of electric power at an appropriate timing while maintaining the operations of the first electronic device 6 and the second electronic device 7 by delaying cutoff of supply of electric power as far as possible.

For example, when the electric vehicle V is a large-size vehicle or a commercial vehicle, an operator needs to get under the mountings to access the first electronic device 6 or the like or needs to open a cap (tilt the cap) to access the first electronic device 6 or the like for the purpose of maintenance work of the first electronic device 6 and the second electronic device 7. Accordingly, it takes time for an operator to access the first electronic device 6 or the like. In this case, the first stoppage time and the second stoppage time extend and the time until supply of electric power is cut off after the vehicle speed has become 0 extends. Accordingly, the vehicle power supply control device 1 uses the shortest time required until an operator accesses the first electronic device 6 or the like. Accordingly, the vehicle power supply control device 1 can maintain the operations of the first electronic device 6 and the second electronic device 7 as far as possible by delaying cutoff of supply of electric power and cut off supply of electric power when an operator accesses the first electronic device 6 or the like.

### (Second embodiment)

A vehicle power supply control device according to a second embodiment will be described below. In describing constituents of the vehicle power supply control device according to the second embodiment, the same elements as the constituents in the vehicle power supply control device 1 according to the first embodiment will be referred to by the same reference signs and detailed description thereof will be omitted. In the following description, differences from the vehicle power supply control device 1 according to the first embodiment will be mainly described.

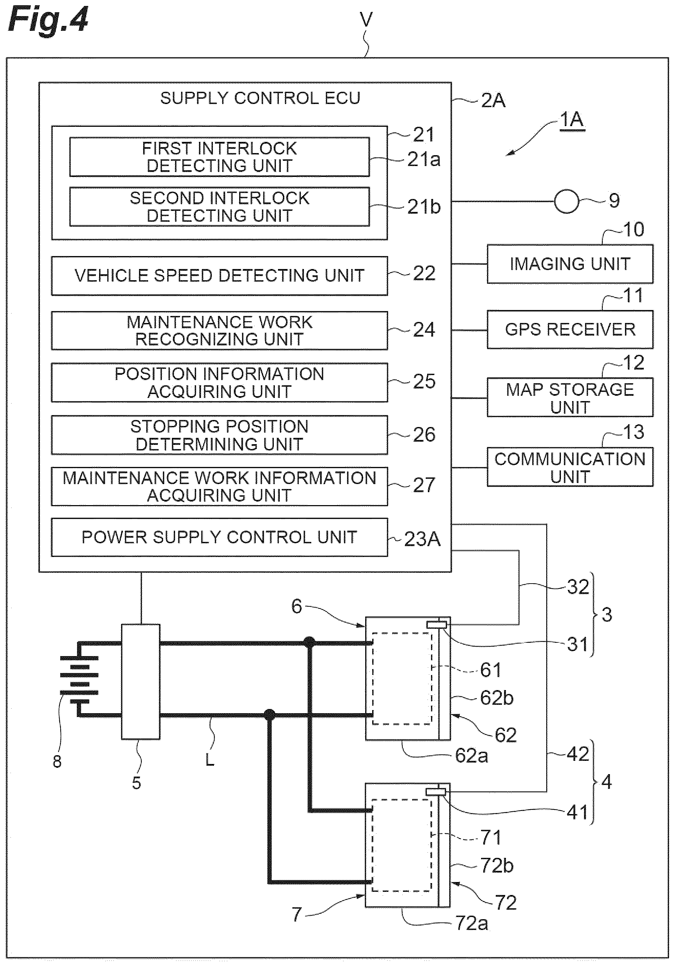

As illustrated in FIG. 4, a vehicle power supply control device 1A according to the second embodiment is mounted in an electric vehicle V. The vehicle power supply control device 1A includes a supply control ECU 2A, a first interlock circuit 3, a second interlock circuit 4, a cutoff circuit 5, and an imaging unit 10.

The imaging unit 10 is an imaging device that image surroundings of the electric vehicle V. The imaging unit 10 may be, for example, a drive recorder or a camera for supporting driving of the electric vehicle V (for example, a camera for an around-view monitor). The imaging unit 10 is configured to image at least an operator who performs maintenance work on the electric vehicle V.

The supply control ECU 2A includes an interlock detecting unit 21, a vehicle speed detecting unit 22, a power supply control unit 23A, a maintenance work recognizing unit 24, a position information acquiring unit 25, a stopping position determining unit 26, and a maintenance work information acquiring unit 27.

The maintenance work recognizing unit 24 recognizes whether an operator is performing maintenance work on at least one of the first electronic device 6 and the second electronic device 7 of the electric vehicle V based on an image captured by the imaging unit 10. Here, the maintenance work recognizing unit 24 can recognize whether an operator is performing maintenance work from the captured image based on a known image recognition technique.

The position information acquiring unit 25 acquires current position information of the electric vehicle V. For example, when the electric vehicle V has a global positioning system (GPS) receiver 11 mounted therein, position information of the electric vehicle V may be acquired based on a signal acquired by the GPS receiver 11. The position information acquiring unit 25 may acquire position information of the electric vehicle V using a known method instead of using the GPS receiving unit 11.

When the electric vehicle V stops, the stopping position determining unit 26 determines whether the electric vehicle V stops in a safety zone or a parking space based on the position information acquired by the position information acquiring unit 25 and map information. For example, the stopping position determining unit 26 can use map information stored in a map storage unit 12 mounted in the electric vehicle V as the map information. The map storage unit 12 stores map information including information on various maps such as safety zones or parking spaces. A safety zone is a space in which the electric vehicle V can stop such as a space provided on one side of a travel lane. A parking space is a space in which the electric vehicle V can park and includes a parking space and maintenance space provided in various facilities such as repair shops.

The maintenance work information acquiring unit 27 acquires maintenance work information indicating that an operator is performing maintenance work on the electric vehicle V. For example, when information indicating that the electric vehicle V is under maintenance is set in a system of an operation management company that manages operations of electric vehicles V, the maintenance work information acquiring unit 27 may acquire the information as the maintenance work information. The maintenance work information acquiring unit 27 can acquire maintenance work information, for example, via a communication unit 13 mounted in the electric vehicle V. The maintenance work information may be information which is directly input to the vehicle power supply control device 1A by an operator who performs maintenance work.

The power supply control unit 23A cuts off supply of electric power from the high-voltage battery 8 to the first electronic device 6 and the second electronic device 7 when predetermined cutoff conditions are satisfied. The cutoff conditions include a first cutoff condition, a second cutoff condition, and a third cutoff condition. The case in which the cutoff conditions are satisfied means a case in which at least one of the first cutoff condition, the second cutoff condition, and the third cutoff condition is satisfied.

### (First cutoff condition)

The first cutoff condition will be first described below. The power supply control unit 23A uses a condition that the vehicle speed detected by the vehicle speed detecting unit 22 is 0 and the maintenance work recognizing unit 24 recognizes that an operator is performing maintenance work after an interlock has been detected by the interlock detecting unit 21 as the first cutoff condition. When the first cutoff condition is satisfied, the power supply control unit 23A cuts off supply of electric power from the high-voltage battery 8 to the first electronic device 6 and the second electronic device 7.

### (Second cutoff condition)

The second cutoff condition will be described below. The power supply control unit 23A uses a condition that the vehicle speed detected by the vehicle speed detecting unit 22 is 0 and the stopping position determining unit 26 determines that the electric vehicle V stops in a safety zone or a parking space after an interlock has been detected by the interlock detecting unit 21 as the second cutoff condition. When the second cutoff condition is satisfied, the power supply control unit 23A cuts off supply of electric power from the high-voltage battery 8 to the first electronic device 6 and the second electronic device 7.

### (Third cutoff condition)

The third cutoff condition will be described below. The power supply control unit 23A uses a condition that the vehicle speed detected by the vehicle speed detecting unit 22 is 0 and the maintenance work information acquiring unit 27 acquires maintenance work information after an interlock has been detected by the interlock detecting unit 21 as the third cutoff condition. When the third cutoff condition is satisfied, the power supply control unit 23A cuts off supply of electric power from the high-voltage battery 8 to the first electronic device 6 and the second electronic device 7.

In this way, by cutting off supply of electric power when at least one of the first to third cutoff conditions is satisfied, the power supply control unit 23A can allow a state in which supply of electric power has been cut off when an operator performs maintenance work after an interlock has been detected.

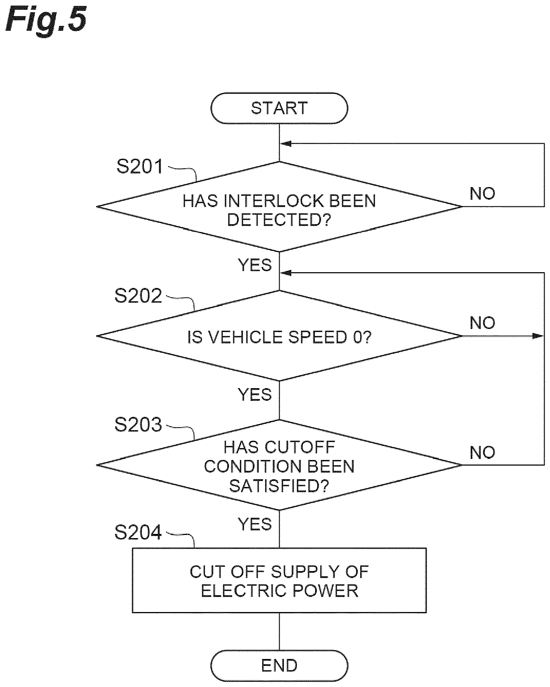

A flow of a power supply cutting-off process when an interlock is detected will be described below. The flowchart illustrated in FIG. 5 starts when the electric vehicle V starts running.

As illustrated in FIG. 5, the interlock detecting unit 21 detects whether an interlock has occurred in the first electronic device 6 and the second electronic device 7 (S201). When an interlock has not been detected (S201: NO), the interlock detecting unit 21 repeatedly performs the process of S201 until an interlock is detected.

When an interlock has been detected by the interlock detecting unit 21 (S201: YES), the power supply control unit 23A determines whether the vehicle speed detected by the vehicle speed detecting unit 22 is 0 (S202). When the vehicle speed is 0 (S202: YES), the power supply control unit 23A determines whether a cutoff condition has been satisfied (S203). When at least one of the first to third cutoff conditions has been satisfied, the power supply control unit 23A determines that the cutoff condition has been satisfied.

When it is determined that the cutoff condition has been satisfied (S203: YES), the power supply control unit 23A cuts off supply of electric power from the high-voltage battery 8 to the first electronic device 6 and the second electronic device 7 (S204). On the other hand, when the cutoff condition has not been satisfied (S203: NO), the power supply control unit 23A causes the routine to return to S202 and performs the aforementioned processes.

When it is determined in S202 that the vehicle speed is not 0 (S202: NO), the power supply control unit 23A causes the routine to return to S202 and performs the aforementioned processes.

As described above, the vehicle power supply control device 1A cuts off supply of electric power when the power supply control unit 23A determines that the first cutoff condition has been satisfied after an interlock has been detected. Accordingly, even when an interlock has been detected by the interlock detecting unit 21, supply of electric power from the high-voltage battery 8 to the first electronic device 6 and the second electronic device 7 is not cut off until the vehicle speed becomes 0 and the maintenance work recognizing unit 24 recognizes that an operator is performing maintenance work. That is, even when occurrence of an interlock has been detected by the interlock detecting unit 21, supply of electric power is not cut off immediately until it is recognized based on a captured image that an operator starts maintenance work. A state in which the first electronic device 6 and the second electronic device 7 are operating is maintained as far as possible. When the first electronic device 6 or the like can operate as far as possible, the electric vehicle V can run or the like until supply of electric power is cut off. On the other hand, when the maintenance work recognizing unit 24 recognizes that an operator is performing maintenance work, that is, an operator is actually performing maintenance work, the power supply control unit 23A cuts off supply of electric power. In this way, the vehicle power supply control device 1A can cut off supply of electric power at a more appropriate timing when occurrence of an interlock in the first electronic device 6 and the second electronic device 7 is detected.

The vehicle power supply control device 1A cuts off supply of electric power when the power supply control unit 23A determines that the second cutoff condition has been satisfied after an interlock has been detected. Accordingly, even when an interlock has been detected by the interlock detecting unit 21, supply of electric power from the high-voltage battery 8 to the first electronic device 6 and the second electronic device 7 is not cut off until the vehicle speed becomes 0 and the stopping position determining unit 26 determines that the electric vehicle V stops in a safety zone or a parking space. That is, even when occurrence of an interlock has been detected by the interlock detecting unit 21, supply of electric power is not cut off immediately until it is determined that the electric vehicle V stops in a safety zone or a parking space in which an operator can perform maintenance work. A state in which the first electronic device 6 and the second electronic device 7 are operating is maintained as far as possible. When the first electronic device 6 or the like can operate as far as possible, the electric vehicle V can run or the like until supply of electric power is cut off. On the other hand, when the electric vehicle V stops in a safety zone or a parking space and an operator can perform maintenance work, the power supply control unit 23A cuts off supply of electric power. In this way, the vehicle power supply control device 1A can cut off supply of electric power at a more appropriate timing when occurrence of an interlock in the first electronic device 6 and the second electronic device 7 is detected.

As described above, the vehicle power supply control device 1A cuts off supply of electric power when the power supply control unit 23A determines that the third cutoff condition has been satisfied after an interlock has been detected. Accordingly, even when an interlock has been detected by the interlock detecting unit 21, supply of electric power from the high-voltage battery 8 to the first electronic device 6 and the second electronic device 7 is not cut off until the vehicle speed becomes 0 and maintenance work information indicating that an operator is performing maintenance work on the electric vehicle V is acquired. That is, even when occurrence of an interlock has been detected by the interlock detecting unit 21, supply of electric power is not cut off immediately until maintenance work information is acquired. A state in which the first electronic device 6 and the second electronic device 7 are operating is maintained as far as possible. When the first electronic device 6 or the like can operate as far as possible, the electric vehicle V can run or the like until supply of electric power is cut off. On the other hand, when maintenance work information is acquired and an operator is performing maintenance work, the power supply control unit 23A cuts off supply of electric power. In this way, the vehicle power supply control device 1A can cut off supply of electric power at a more appropriate timing when occurrence of an interlock in the first electronic device 6 and the second electronic device 7 is detected.

Since the power supply control unit 23A cuts off supply of electric power when two or more conditions out of the first to third cutoff conditions are satisfied, it is possible to more reliably cut off supply of electric power at a time point at which an operator performs maintenance work.

The vehicle power supply control device 1 according to the first embodiment and the vehicle power supply control device 1A according to the second embodiment cut off supply of electric power without using a position of a shift lever in the electric vehicle V. For example, when the electric vehicle V parks, the position of the shift lever may not be set to a specific position due to an external environment (a cold region), a driver's habits, or the like. In this situation, when it is intended to cut off supply of electric power based on the position of the shift lever, supply of electric power may not be appropriately cut off. On the other hand, since the vehicle power supply control devices 1 and 1A do not use the position of the shift lever of the electric vehicle V, it is possible to more appropriately cut off supply of electric power.

While embodiments of the present disclosure have been described above, the present disclosure is not limited to the embodiments. For example, two high-voltage devices including the first electronic device 6 and the second electronic device 7 are mounted in the electric vehicle V, but the number of high-voltage electronic devices mounted in the electric vehicle V is not limited to two. For example, the electric vehicle V may have only one electronic device mounted therein as a high-voltage device or may have three or more electronic devices mounted therein.

### Reference Signs List

1, 1A Vehicle power supply control device
3 First interlock circuit (interlock circuit)
4 Second interlock circuit (interlock circuit)
6 First electronic device (electronic device)
7 Second electronic device (electronic device)
8 High-voltage battery (onboard battery)
10 Imaging unit
21 Interlock detecting unit
21a First interlock detecting unit
21b Second interlock detecting unit
22 Vehicle speed detecting unit
23, 23A Power supply control unit
24 Maintenance work recognizing unit
25 Position information acquiring unit
26 Stopping position determining unit
27 Maintenance work information acquiring unit
62 First case (case)
72 Second case (case)
L Power supply harness
V Electric vehicle

## Claims

1. A vehicle power supply control device that is mounted in an electric vehicle and that controls supply of electric power from an onboard battery to an electronic device, the vehicle power supply control device comprising:
an interlock circuit configured to detect opening of a case of the electronic device or separation of a power supply harness from the electronic device;
an interlock detecting unit configured to detect the opening or the separation based on an input signal from the interlock circuit;
a vehicle speed detecting unit configured to detect a vehicle speed of the electric vehicle; and
a power supply control unit configured to cut off supply of electric power from the onboard battery to the electronic device when a duration of a state in which the vehicle speed detected by the vehicle speed detecting unit is 0 exceeds a predetermined stoppage time after the opening or the separation has been detected by the interlock detecting unit.

2. The vehicle power supply control device according to claim 1, wherein the electronic device includes a first electronic device and a second electronic device,
wherein the interlock circuit includes a first interlock circuit configured to detect opening of a case of the first electronic device or separation of the power supply harness from the first electronic device and a second interlock circuit configured to detect opening of a case of the second electronic device or separation of the power supply harness from the second electronic device,
wherein the interlock detecting unit includes a first interlock detecting unit configured to detect the opening or the separation for the first electronic device based on an input signal from the first interlock circuit and a second interlock detecting unit configured to detect the opening or the separation for the second electronic device based on an input signal from the second interlock circuit,
wherein the stoppage time is determined in advance for each of the first electronic device and the second electronic device, a first stoppage time is determined in advance for the first electronic device, and a second stoppage time is determined in advance for the second electronic device, and
wherein the power supply control unit is configured to:
cut off supply of electric power from the onboard battery to the first electronic device and the second electronic device when the duration of the state in which the vehicle speed detected by the vehicle speed detecting unit is 0 exceeds the first stoppage time after the opening or the separation for the first electronic device has been detected by the first interlock detecting unit; and
cut off supply of electric power from the onboard battery to the first electronic device and the second electronic device when the duration of the state in which the vehicle speed detected by the vehicle speed detecting unit is 0 exceeds the second stoppage time after the opening or the separation for the second electronic device has been detected by the second interlock detecting unit.

3. The vehicle power supply control device according to claim 1, wherein the stoppage time is a shortest time required for an operator to access the electronic device after the electric vehicle has stopped.

4. The vehicle power supply control device according to claim 2, wherein the first stoppage time is a shortest time required for an operator to access the first electronic device after the electric vehicle has stopped, and
wherein the second stoppage time is a shortest time required for an operator to access the second electronic device after the electric vehicle has stopped.

5. A vehicle power supply control device that is mounted in an electric vehicle and that controls supply of electric power from an onboard battery to an electronic device, the vehicle power supply control device comprising:
an interlock circuit configured to detect opening of a case of the electronic device or separation of a power supply harness from the electronic device;
an interlock detecting unit configured to detect the opening or the separation based on an input signal from the interlock circuit;
a vehicle speed detecting unit configured to detect a vehicle speed of the electric vehicle;
an imaging unit configured to image surroundings of the electric vehicle;
a maintenance work recognizing unit configured to recognize whether an operator is performing maintenance work on the electric vehicle based on an image captured by the imaging unit; and
a power supply control unit configured to cut off supply of electric power from the onboard battery to the electronic device when the vehicle speed detected by the vehicle speed detecting unit is 0 and the maintenance work recognizing unit recognizes that the maintenance work is being performed after the opening or the separation has been detected by the interlock detecting unit.

6. A vehicle power supply control device that is mounted in an electric vehicle and that controls supply of electric power from an onboard battery to an electronic device, the vehicle power supply control device comprising:
an interlock circuit configured to detect opening of a case of the electronic device or separation of a power supply harness from the electronic device;
an interlock detecting unit configured to detect the opening or the separation based on an input signal from the interlock circuit;
a vehicle speed detecting unit configured to detect a vehicle speed of the electric vehicle;
a position information acquiring unit configured to acquire position information of the electric vehicle;
a stopping position determining unit configured to determine whether the electric vehicle stops in a safety zone or a parking space based on the position information acquired by the position information acquiring unit and map information; and
a power supply control unit configured to cut off supply of electric power from the onboard battery to the electronic device when the vehicle speed detected by the vehicle speed detecting unit is 0 and the stopping position determining unit determines that the electric vehicle stops in the safety zone or the parking space after the opening or the separation has been detected by the interlock detecting unit.

7. A vehicle power supply control device that is mounted in an electric vehicle and that controls supply of electric power from an onboard battery to an electronic device, the vehicle power supply control device comprising:
an interlock circuit configured to detect opening of a case of the electronic device or separation of a power supply harness from the electronic device;
an interlock detecting unit configured to detect the opening or the separation based on an input signal from the interlock circuit;
a vehicle speed detecting unit configured to detect a vehicle speed of the electric vehicle;
a maintenance work information acquiring unit configured to acquire maintenance work information indicating that an operator is performing maintenance work on the electric vehicle; and
a power supply control unit configured to cut off supply of electric power from the onboard battery to the electronic device when the vehicle speed detected by the vehicle speed detecting unit is 0 and the maintenance work information is acquired by the maintenance work information acquiring unit after the opening or the separation has been detected by the interlock detecting unit.
